# EUROPEAN PATENT SPECIFICATION

(11) **EP 1 407 631 B1**
(45) Date of publication and mention of the grant of the patent: **16.12.2009**
(21) Application number: 01960324.0
(22) Date of filing: 18.06.2001
(51) Int. Cl.: H04W 8/12

(54) **ROAMING FROM IMS DOMAIN TO THE CS DOMAIN**
ROAMING VOM IMS-BEREICH IN DEN CS-BEREICH
ITINERANCE D'UN DOMAINE IMS AU DOMAINE CS

(43) Date of publication of application: 14.04.2004
(73) Proprietor: Nokia Corporation, 02150 Espoo (FI)
(72) Inventor: HUOTARI, Seppo, FIN-02600 Espoo (FI); TUOHINO, Markku, FIN-02130 Espoo (FI)
(74) Representative: TBK-Patent
(86) International application number: PCT/EP2001/006844
(87) International publication number: WO 2002/104057

(56) References cited:
- WO-A1-00/51330
- WO-A1-00/79814
- WO-A1-00/79825

## Description

The present invention relates to a method of routing a terminated call to a subscriber from an Internet protocol based domain to a circuit switched domain. In addition, the present invention also relates to a serving call state control functionality device and a home subscriber service device for routing a terminated call to a subscriber from an Internet protocol based domain to a circuit switched domain.

With the increasing extension of the Internet Protocol (IP) to all communication fields including telephony and particularly mobile telephony, not only a large amount of networking of different systems becomes possible, but also demands occur to provide for a smooth user handling between all accessible communication systems. However, the accessible communication systems also include non-IP related communication systems, for example circuit switched (CS) domains as the GSM network.

Hence, the problem is present that a user may be subscriber to an Internet Protocol Multimedia System (IMS) domain as well as to a CS domain. Thus, such users wish to roam between the domains they subscribe to. Several specific technical problems are connected therewith from which the present invention is directed to the problem of routing terminated calls from the IMS side to the CS side.

Further, document WO 00/79814 A1 discloses a mobility between IP telephony networks and cellular networks. A technique is provided allowing a subscriber to roam between two types of networks, including a packet-switched telephony network (or IP-telephony network) and a cellular network. As an example, a subscriber terminal that is a subscriber of a first type of network includes a Home location register in the first type of network, and roams to a second type of network. The Home location register may be a Home VoIPLR for an IP-telephony network subscriber, or an HLR for a cellular network subscriber. To register in the new or second type of network, the subscriber terminal provides a subscriber ID to a serving location register located in the second type of network. The serving location register in the second type of network then sends updated location information for the subscriber to the subscriber's home location register located in first type of network via a gateway based on the subscriber ID. The gateway (e.g., a cellular gateway) interfaces the first and second types of networks. A call request to the subscriber terminal is received. The subscriber's updated location information is obtained from the Home location register and is used to establish the call to the subscriber.

Moreover, document WO 00/79825 A1 discloses a gateway, a system and a method for supporting roaming. A system is provided that includes a cellular network, a Public Switched Telephone Network (PSTN) and a mobile IP-telephony network (MIPTN). Both the cellular network and the MIPTN include a Home Function and one or more visited Functions. MIPTN subscribers can roam within the MIPTN. Also, a Gateway Function interfaces the PSTN and the MIPTN to allow roaming between the cellular network and the MIPTN. The Gateway Function performs a dynamic mapping function between PSTN/cellular addresses (e.g., in E. 164 format) and MIPTN addresses (e.g., IP addresses) to allow registration and call delivery for subscribers roaming between the cellular network and the MIPTN. A similar type of Gateway Function also allows Short Message Service (SMS) messages to be delivered over the MIPTN as well.

Therefore, it is an object of the present invention to provide a simple and efficient method of enabling roaming from an Internet Protocol based domain to a circuit switched domain.

According to the present invention, this object is solved by providing a method of routing a terminated call to a subscriber from an Internet Protocol based domain to a circuit switched domain, wherein said Internet Protocol based domain has call state control functionalities implemented, said method comprising the steps of receiving an invitation of said subscriber for a call by at least one call state control functionality within said Internet Protocol based domain; obtaining the profile of said subscriber from said home subscriber serving means to a call state control functionality; requesting further routing information from said home subscriber serving means; requesting a switching means within said circuit switched domain currently visited by said subscriber for said roaming number by said home subscriber serving means; returning said roaming number of said subscriber to said home subscriber serving means by said visited switching means; returning said roaming number as said further routing information from said home subscriber serving means to said call state control functionality; and establishing said call via gateway means for connecting said domains as well as via said visited switching means to said subscriber.

With the method according to the present invention, an IMS subscriber with a subscription providing access to one or more domains is allowed to roam from an Internet Protocol based domain to a circuit switched domain in a simple and efficient way. The CS domain functionalities can remain unchanged as contribution to the interworking between the Internet Protocol based domain and the CS domain. Further, with the method according to the present invention, the call can be kept longer in the IP based domain side which is in turn connected with several other advantages.

While the method according to the present invention is not bounded to any particular implementation of a call state control functionality, an option can be considered where said call state control functionality is implemented into two entities.

Accordingly, as an option of the method according to the present invention, subsequent to the receipt of said invitation, a step of requesting the location of said subscriber from said home subscriber serving means is performed; an indication from a serving means for home subscriber within said Internet Protocol based domain that said subscriber is not registered within said Internet Protocol based domain is returned; and subsequent to said return of an indication, a step of inviting another call state control functionality for said call is performed, wherein said other call state control functionality performs all subsequent steps mentioned in claim 1 as related to said call state control functionality.

Regarding said home subscriber serving means, the method according to the present invention is not limited to a particular architecture of the IMS domain with respect to that. For example, a home location registering means can be external to said home subscriber serving means. Thus, a new interface and also a new functionality would have to be introduced between said home subscriber serving means and said external home location registering means. Some properties of this interface would be to facilitate the roaming number inquiry by the home subscriber serving means, to provide a different inquiry for the request of said further routing information, because CS domain service are overridden in the home location registering means, and to be accessible from other elements than said home subscriber serving means which means that said routing number inquiry may be started from other entities.

However, the method according to the present invention can be readily brought into coincidence with a home subscriber serving means which is a combination of a mobility serving means (IP multimedia functionality) of the IP based domain with a home location registering means (subset of HLR functionality) of the CS based domain.

Accordingly, in the method according to the present invention, if an IP multimedia functionality and a subset of home location registering functionality are integrated into said home subscriber serving means, then said registering request, if applicable, and return is performed with said IP multimedia part; said profile request and download is performed with said IP multimedia part; said roaming number provision requesting step as executed to said home subscriber serving means is performed with said IP multimedia part; subsequent thereto, a step of requesting said home location registering part for the provision of the roaming number of said subscriber is performed by said IP multimedia part; said roaming number provision requesting step as executed to said visited switching means is performed with said home location registering part; said roaming number returning step as executed by said visited switching means is performed with said home location registering part; subsequent thereto, a step of returning said roaming number from said home location registering part to said IP multimedia part within said home subscriber serving means is performed; and said roaming number returning step as executed to said serving call state control functionality is performed by said IP multimedia part.

Thus, as an advantageous embodiment of the present invention, there is provided a home subscriber serving device capable of using routing information for terminating a call to a subscriber, comprising an IP multimedia part and a home location registering part interfaced to each other, wherein said home location registering part comprises transceiver means capable of requesting and receiving roaming numbers from the circuit switched domain.

In the present field which is still under development, it may be necessary or desirable that certain terminating call related service functions are overridden.

Hence, as further modification of the method according to the present invention, the step of requesting further routing information from said home subscriber serving means can involve the overriding of at least one terminating call related service functionality within said home subscriber serving means.

As further solution of the present object, according to the present invention a serving call state control functionality device for providing a routing service to a circuit switched domain is provided, said serving call state control functionality device providing a functionality of an Internet Protocol based domain and comprising means which are adapted to perform related steps of the method according to the present invention or modifications thereof.

Thus, services of the Internet Protocol based domain can be provided for the roaming subscriber (to the Internet Protocol based domain) within this serving call state control functionality device. Additionally, there can be some services, e.g. roaming leg charging which are provided in the S-CSCF (by IMS service). In other words, although the services are IMS services, they can have CS flavor, because the roaming service needs to take CS aspects into account.

The present invention will become more apparent from the following detailed description of the preferred embodiments when taken in conjunction with the accompanying drawings.

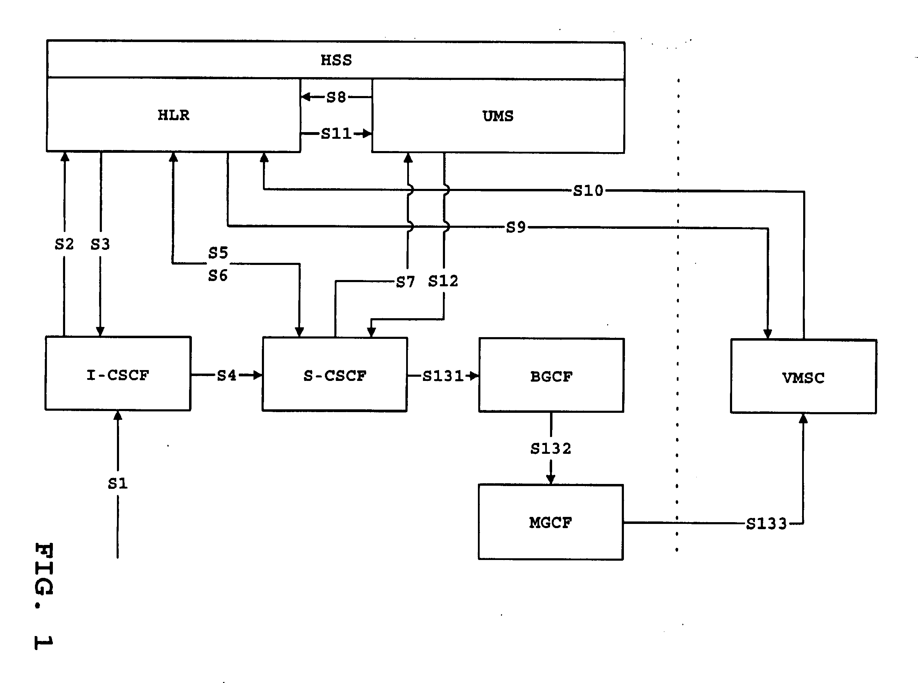

Fig. 1 shows a circuit switched routing service of a serving call state control functionality of an Internet Protocol based domain under consideration of a solution having a home subscriber serving means as an implementation of the method according to the present invention.

As mentioned above, the present invention aims to provide requests the location of the called subscriber from the home subscriber server HSS.

Here, description is made with respect to the functionalities related to a call state control functionality (CSCF) being divided into an interrogating CSCF and a serving CSCF. However, the present invention is not limited thereto, these functionalities can also be implemented in only one entity or in more than two.

Here, as one option of the present invention, a home subscriber server HSS is considered where this HSS comprises the subset of the HLR functionality to support roaming to GSM/UMTS CS domain networks and the IP multimedia functionality. In this case, these parts of the home subscriber server do have an internal interface over which they communicate.

Anyway, the following description is given by considering the home subscriber server having an IP multimedia functionality interfaced to a subset of HLR functionality.

As other options, the home subscriber server can be of any other kind (e.g. a single entity) or even be replaced by any entity acting equivalently.

However, the present invention can advantageously make use of the above mentioned preferred embodiment, although being not bound thereto, i.e. the structure of the home subscriber server HSS is not essential for the method according to the present invention.

Anyway, the following description is given by considering the home subscriber server having an IP multimedia functionality interfaced to a subset of HLR functionality.

That is, the above mentioned step S2 is directed to the IP multimedia functionality of the home subscriber server HSS and, in a step S3, this part returns the information to the interrogating call state control function I-CSCF that the subscriber is presently not registered in the IMS domain.

Next, the interrogating call state control function I-CSCF invites a serving call state control function S-CSCF which supports terminated sessions for unregistered subscriber by default. This constitutes step S4.

As the serving call state control functionality S-CSCF needs the subscriber's user profile, it initiates a respective download by a request to the IP multimedia functionality within the HSS. These actions correspond to steps S5 and S6, respectively.

As one embodiment of the present invention, messages for indication returning (step S3) and profile obtaining (step S5) are implemented as a single message.

However, also in this case steps S3 and S5 can still be perceived as logically separate, since the receiving of said indication and the obtaining of the profile are two independent functions.

In the method of the present invention according to Fig. 1, thereafter, as a preferred embodiment of the present invention, the serving call state control function S-CSCF initiates a routing service to the circuit switched domain, starting with step S7 in which further routing information is requested from the IP multimedia functionality within the HSS. Within the HSS the functionality responsible for the IP Multimedia (IM) contacts the home location register part of the HSS in a step S8, to formulate the roaming number query.

Then, a query to provide the roaming number of the subscriber as the above mentioned further routing information is performed. That is, the mobile services switching center VMSC of the circuit switched domain which the subscriber currently visits is requested for the roaming number, constituting step S9. In response thereto, a step S10 is performed where the visited mobile services switching center VMSC returns the roaming number back to the home location register HLR. The home location register HLR part of the HSS, in turn, returns the roaming number in a step S11 to the functionality handling the IM which executes step S12, returning this roaming number back to the serving call state control function S-CSCF.

Having the roaming number, the serving call state control function S-CSCF can continue the call routing on the basis of this information. This means that the call is finally established via the breakout gateway control function BGCF, the media gateway control function MGCF, the signaling gateway function SGW, and the visited mobile services switching center VMSC to the terminal of the subscriber. This is indicated by steps S131-S134.

The query for obtaining the roaming number from the visited mobile services switching center VMSC corresponding to steps S9 and S10 can be performed by exchanging messages "Provide Roaming Number" and "Provide Roaming Number acknowledgment", respectively.

The query requesting the further routing information which corresponds to steps S7 and S12 can be performed by exchanging messages "Cx_Location_query" and "Cx_Location_query_Resp", respectively. These messages are then part of the Cx-interface.

Thus, as the requested further information, the serving call state control function S-CSCF can obtain a "Mobile Station Roaming Number" MSRN.

Generally speaking, while it is possible with the present invention that the IMS services are provided within the serving call state control function S-CSCF for the roaming IMS subscriber, it may be that it is unwanted that services of the CS domain are introduced to the serving call state control function S-CSCF. Hence, it is an option that services of said home location register HLR related to said CS domain are overridden by said CS routing service of the serving call state control function S-CSCF.

The services of said home location register related to CS domain are hereafter referred to as the CS services. The CS services overridden in the method of this invention are typically the ones related to terminating calls.

The terminating call CS service functionalities would typically be invoked when the routing information is requested from the home location register, or in this case from the HSS (S7). The invocation means that as the routing information request arrives to the home location register, it starts to process the functionalities for the CS services. These services typically include incoming call barring, closed user group (CUG) and call forwarding - especially call forwarding unconditional (CFU) and the terminating call Camel services (CAMEL: customized applications for mobile networks enhanced logic) .

For instance, the functionalities that must be overridden are the ones that would hinder the routing of the terminating call leg directly to the subscriber in the CS domain such as call forwarding or incoming call barring. Similarly, the functionalities that must be overridden include the ones that would indicate service invocation requests to the HSS/HLR inquiring node, which is normally a circuit switched gateway MSC, however, in this case the S-CSCF. These service invocation requests would typically be such that their fulfillment requires such service functionalities in the S-CSCF that are unnecessary for the simple routing of a terminating call leg to the CS side for the subscriber. The terminating call leg from the S-CSCF to the VMSC can be seen as a direct pipe not involving supplementary services that would affect call routing. The service functionalities in the S-CSCF that are unnecessary for the simple routing of a terminating call leg include for instance the Camel gsmSSF functionalities for the GMSC or the IMSC (the one inquiring the HLR normally). Therefore, no Camel service information (CSI, T-CSI) are returned from the HSS and no triggering to the CSE from the S-CSCF is required during the course of the CS terminating call leg set-up from the S-CSCF to the VMSC.

Furthermore, in the case of call forwarding unconditional, the service functionality would obtain the forwarded-to number from the subscriber database and return it in routing information request response, instead of sending the provide roaming number request to the VMSC/VLR. In the case of terminating call Camel functionalities, the service functionality would return the terminating Camel service information (T-CSI) obtained from subscriber database in the routing information request response. The T-CSI would then be processed by the inquiring node i.e. GMSC or S-CSCF to send an inquiry to the Camel service environment (CSE). The service logic for terminating call Camel services would then be executed in the Camel service environment (CSE).

Especially the performing of the inquiry to the Camel service environment would be a problem for the S-CSCF, since the terminal call IP multimedia services belong to its responsibility. These services may be overlapping with the terminating CS services.

In the preferred embodiments of this invention, the service functionalities for the terminating call CS services are not started in the HSS when it is detected by the HSS that the routing information request (S7) is from a S-CSCF and/or relating to terminating call routing towards CS side for a dual subscription subscriber. For instance, this can be detected by inspecting the source address of the routing information request message. Alternatively, there can be a dedicated message for the routing information request for the purpose of the overriding of the service functionalities for the terminating call CS services. Similarly, an indicator in a routing information request message can be used.

A preferred embodiment of the present invention is an implementation where the home subscriber server HSS is used with the Provide Roaming Number query being performed with messages as described. Another preferred embodiment is that services of the CS domain are not introduced to the serving call state control function S-CSCF. Hence, a fully compatibility to the existing standards e.g. or GSM/UMTS/3GGP at the time of the present invention is aimed. However, depending on the implementation, some "flavor" of CS services may need to be included into the CS routing service. Anyway, the services in HLR should be overridden and all services are executed in the serving CSCF.

Included in the above description is a method of routing a terminated call to a subscriber from an Internet Protocol based domain to a circuit switched domain, wherein said Internet Protocol based domain has call state control functionalities implemented, said method comprising the steps of receiving an invitation of said subscriber for a call by at least one call state control functionality within said Internet Protocol based domain; obtaining the profile of said subscriber from said home subscriber serving means to a call state control functionality; requesting further routing information from said home subscriber serving means; requesting a switching means within said circuit switched domain currently visited by said subscriber for said roaming number by said home subscriber serving means; returning said roaming number of said subscriber to said home subscriber serving means by said visited switching means; returning said roaming number as said further routing information from said home subscriber serving means to said call state control functionality; and establishing said call via gateway means for connecting said domains as well as via said visited switching means to said subscriber.

As is understood from the present description by those who are skilled in the art, the present invention can be applied to many technical fields, and changes and modifications may be effected to the presently preferred embodiments without departing from the scope of the appended claims.

## Claims

1. A method of routing a terminated call to a subscriber from an Internet Protocol based domain (**IMS**) to a circuit switched domain (**CS**), said method comprising the steps of
receiving an invitation (**S1**) for said subscriber for a call by at least one call state control functionality implemented in said Internet Protocol based domain (**IMS**);
obtaining (**S5**) a profile of said subscriber from home subscriber serving means (**HSS**) to a call state control functionality (**S-CSCF**);
requesting (**S7**) further routing information from said home subscriber serving means (**HSS**);
requesting (**S9**) a switching means (**VMSC**) within said circuit switched domain (**CS**) currently visited by said subscriber for a roaming number by said home subscriber serving means (**HSS**);
returning (**S10**) said roaming number of said subscriber to said home subscriber serving means (**HSS**) by said visited switching means (**VMSC**);
returning (**S12**) said roaming number as said further routing information from said home subscriber serving means (**HSS**) to said call state control functionality (**S-CSCF**); and
establishing (**S131-S133**) said call via gateway means (**BGCF, MGCF**) for connecting said domains (**IMS, CS**) as well as via said visited switching means (**VMSC**) to said subscriber.

2. A method of routing a terminated call to a subscriber according to claim 1, wherein
subsequent to the receipt of said invitation (**S1**), a step of returning (**S3**) an indication from the home subscriber serving means (**HSS**) that said subscriber is not registered within said Internet Protocol based domain (**IMS**).

3. A method of routing a terminated call to a subscriber according to claim 2, wherein
subsequent to the receipt of said invitation (**S1**) and before said return of an indication (**S3**), a step of requesting (**S2**) the location of said subscriber from said home subscriber serving means (**HSS**) is performed; and
subsequent to said return of an indication (**S3**), a step of inviting (**S4**) another call state control functionality (**S-CSCF**) for said call is performed, wherein said other call state control functionality (**S-CSCF**) performs all subsequent steps mentioned in claim 1 as related to said call state control functionality.

4. A method of routing a terminated call to a subscriber according to any one of claims 1 to 3, wherein an IP multimedia functionality and a subset of home location registering functionality are integrated into said home subscriber serving means (**HSS**), and
said registering request (**S2**) and return (**S3**), if applicable, are performed with said IP multimedia part;
said profile request (**S5**) and download (**S6**) is performed with said IP multimedia part;
said roaming number provision requesting step (**S7**) as executed to said home subscriber serving means (**HSS**) is performed with said IP multimedia part;
subsequent thereto, a step (**S8**) of requesting said home location registering part for the provision of the roaming number of said subscriber is performed by said IP multimedia part;
said roaming number provision requesting step (**S9**) as executed to said visited switching means is performed with said home location registering part;
said roaming number returning step (**S10**) as executed by said visited switching means (**VMSC**) is performed with said home location registering part;
subsequent thereto, a step of returning (**S11**) said roaming number from said home location registering part to said IP multimedia part within said home subscriber serving means (**HSS**) is performed; and
said roaming number returning step (**S12**) as executed to said serving call state control functionality (**S-CSCF**) is performed by said IP multimedia part.

5. A method of routing a terminated call to a subscriber according to claim 1, wherein the step of requesting (**S7**) further routing information from said home subscriber serving means (**HSS**) involves the overriding of at least one terminating call related service functionality within said home subscriber serving means (**HSS**).

6. A method of routing a terminated call to a subscriber according to claim 5, wherein the terminating call related service functionality is a supplementary service functionality.

7. A method of routing a terminated call to a subscriber according to claim 5, wherein the terminating call related service functionality is an intelligent network trigger information related functionality.

8. A method of routing a terminated call to a subscriber according to claim 1, wherein
said step of requesting (**S7**) further routing information is performed by submitting a Send Routing Information message;
said step of requesting (**S9**) the provision of the roaming number of said subscriber are performed by submitting a Provide Roaming Number message;
said step of returning (**S10**) said roaming number of said subscriber is performed by submitting a Provide Roaming Number acknowledgment message; and
said step of returning (**S12**) said roaming number as said further routing information is performed by submitting a Send Routing Information acknowledgment message.

9. A serving call state control functionality device for providing a routing service to a circuit switched domain (**CS**), said serving call state control functionality (**S-CSCF**) device providing a functionality of an Internet Protocol based domain (**IMS**) and comprising means which are configured to perform the steps
receiving an invitation (**S1**) for a subscriber for a call;
obtaining (**S5**) the profile of said subscriber from a home subscriber serving means (**HSS**);
requesting (**S7**) further routing information from said home subscriber serving means (**HSS**);
receiving (**S12**) a roaming number as said further routing information from said home subscriber serving means (**HSS**); and
establishing (**S131**) said call via gateway means (**BGCF**, **MGCF**) to said subscriber.

10. A home subscriber serving device, comprising
an IP multimedia part and a home location registering part interfaced (**S8, S11**) to each other,
wherein the IP multimedia part comprises means configured to provide (**S5**) a profile of a subscriber to a call state control function (**S-CSCF**); and to provide (**S12**) a roaming number as routing information to said call state control function (**S-CSCF**); and
wherein the home location registering part comprises means configured to request (**S9**) said roaming number of said subscriber from visited switching means (**VMSC**).

## Patentansprüche

1. Verfahren zum Routing eines kommenden Anrufs an einen Teilnehmer von einer Internetprotokoll basierten Domäne (IMS) zu einer leitungsvermittelten Domäne (CS), wobei das Verfahren die Schritte aufweist:
Empfangen einer Einladung (S1) für den Teilnehmer zu einem Anruf durch zumindest eine Anrufzustandsteuerungsfunktionalität, die in der Internetprotokoll basierten Domäne (IMS) eingerichtet ist;
Erhalten (S5) eines Profils des Teilnehmers von einer Heimatteilnehmerbedieneinrichtung (HSS) an der Anrufzustandsteuerungsfunktionalität (S-CSCF);
Anfordern (S7) von weiterer Routinginformation von der Heimatteilnehmerbedieneinrichtung (HSS);
Anfordern (S9) einer Roamingnummer von einer Schalteinrichtung (VMSC) in der gerade von dem Teilnehmer besuchten leitungsvermittelten Domäne (CS) durch die Heimatteilnehmerbedieneinrichtung (HSS);
Zurückliefern (S10) der Roamingnummer des Teilnehmers an die Heimatteilnehmerbedieneinrichtung (HSS) durch die besuchte Schalteinrichtung (VMSC);
Zurückliefern (S12) der Roamingnummer als die weitere Routinginformation von der Heimatteilnehmerbedieneinrichtung (HSS) an die Anrufzustandssteuerungsfunktion (S-CSCF); und
Aufbauen (S131-S133) des Anrufs zu dem Teilnehmer sowohl über eine Netzübergangseinrichtung (BGCF, MGCF) zum Verbinden der Domänen (IMS, CS) als auch über die besuchte Schalteinrichtung (VMSC).

2. Verfahren zum Routing eines kommenden Anrufs an einen Teilnehmer gemäß Anspruch 1, wobei
nach dem Erhalt der Einladung (S1) ein Schritt des Zurücklieferns (S3) eines Hinweises von der Heimatteilnehmerbedieneinrichtung (HSS) folgt, dass der Teilnehmer nicht in der Internetprotokoll basierten Domäne (IMS) registriert ist.

3. Verfahren zum Routing eines kommenden Anrufs an einen Teilnehmer gemäß Anspruch 2, wobei
nach dem Empfang der Einladung (S1) und vor dem Zurückliefern eines Hinweises (S3) ein Schritt des Anforderns (S2) des Aufenthalts des Teilnehmers von der Heimatteilnehmerbedieneinrichtung (HSS) durchgeführt wird; und
nach dem Zurückliefern eines Hinweises (S3) ein Schritt eines Einladens (S4) einer anderen Anrufzustandsteuerungsfunktion (S-CSCF) für den Anruf durchgeführt wird, wobei die andere Anrufzustandssteuerungsfunktionalität (S-CSCF) alle nachfolgenden Schritte durchführt, die in Anspruch 1 bezogen auf die Anrufzustandssteuerungsfunktionalität erwähnt sind.

4. Verfahren zum Routing eines kommenden Anrufs an einen Teilnehmer gemäß einem der Ansprüche 1 bis 3, wobei eine IP Multimediafunktionalität und eine Untermenge einer Heimataufenthaltregistrierungsfunktionalität in der Heimatteilnehmerbedieneinrichtung (HSS) integriert sind, und wobei
die Registrierungsanforderung (S2) und Zurücklieferung (S3), wenn anwendbar, mit dem IP Multimediateil durchgeführt werden,
die Profilanforderung (S5) und Download (S6) durch den IP Multimediateil durchgeführt werden;
der Roamingnummerbereitstellungsanforderungsschritt, wie er in Richtung auf die Heimatteilnehmerbedieneinrichtung (HSS) ausgeführt wird, mit dem IP Multimediateil durchgeführt wird;
ein Schritt (S8) des Anforderns des Bereitstellens der Roamingnummer des Teilnehmers von dem Heimataufenthaltregistrierungsteil anschließend durch den IP Multimediateil durchgeführt wird;
der Roamingnummerbereitstellungsanforderungsschritt (S9), wie er in Richtung auf die besuchte Schalteinrichtung ausgeführt wird, mit dem Heimataufenthaltregistrierungsteil durchgeführt wird;
der Roamingnummerzurücklieferungsschritt (S10), wie er durch die besuchte Schalteinrichtung (VMSC) ausgeführt wird, mit dem Heimataufenthaltregistrierungsteil durchgeführt wird;
ein Schritt des Zurücklieferns (S11) der Roamingnummer von dem Heimataufenthaltregistrierungsteil an den IP Multimediateil in der Heimatteilnehmerbedieneinrichtung (HSS) daran anschließend durchgeführt wird; und
der Roamingnummerzurücklieferungsschritt (S12), wie er in Richtung auf die Anrufzustandssteuerungsfunktionalität (S-CSCF) ausgeführt wird, wird durch den IP Multimediateil durchgeführt.

5. Verfahren zum Routing eines kommenden Anrufs an einen Teilnehmer gemäß Anspruch 1, wobei der Schritt des Anforderns (S7) weiterer Routinginformation von der Heimatteilnehmerbedieneinrichtung (HSS) das Beeinflussen von zumindest einer auf einen kommenden Ruf bezogenen Dienstfunktionalität in der Heimatteilnehmerbedieneinrichtung (HSS) beinhaltet.

6. Verfahren zum Routing eines kommenden Anrufs an einen Teilnehmer gemäß Anspruch 5, wobei die auf einen kommenden Ruf bezogene Dienstfunktionalität eine ergänzende Dienstfunktionalität ist.

7. Verfahren zum Routing eines kommenden Anrufs an einen Teilnehmer gemäß Anspruch 5, wobei die auf einen kommenden Ruf bezogene Dienstfunktionalität eine auf eine Auslöseinformation eines Intelligenten Netzwerks bezogene Funktionalität ist.

8. Verfahren zum Routing eines kommenden Anrufs an einen Teilnehmer gemäß Anspruch 1, wobei
der Schritt des Anforderns (S7) weiterer Routinginformation durch Übergeben einer SendeRoutingInformation Nachricht durchgeführt wird;
der Schritt des Anforderns (S9) der Bereitstellung der Roamingnummer des Teilnehmers durch Übergeben einer StelleRoamingnummerBereit Nachricht durchgeführt wird;
der Schritt des Zurückgebens (S10) der Roamingnummer des Teilnehmers durch Übergeben einer StelleRoamingnummerBereit Bestätigungsnachricht durchgeführt wird; und
der Schritt des Zurücklieferns (S12) der Roamingnummer als die weitere Routinginformation durch Übergeben einer SendeRoutingInformation Bestätigungsnachricht durchgeführt wird.

9. Bedienanrufzustandssteuerungsfunktionalitätsvorrichtung zum Bereitstellen eines Routingdienstes in Richtung auf eine leitungsvermittelte Domäne (CS), wobei die Bedienanrufzustandssteuerungsfunktionalitätsvorrichtung (S-CSCF) eine Funktionalität einer Internetprotokoll basierten Domäne (IMS) bereitstellt und Einrichtungen aufweist, die konfiguriert sind, die Schritte durchzuführen:
Empfangen einer Einladung (S1) zu einem Anruf für einen Teilnehmer;
Erhalten (S5) des Profils des Teilnehmers von einer Heimatteilnehmerbedieneinrichtung (HSS);
Anfordern (S7) von weiterer Routinginformation von der Heimatteilnehmerbedieneinrichtung (HSS);
Empfangen (S12) einer Roamingnummer als die weitere Routinginformation von der Heimatteilnehmerbedieneinrichtung (HSS); und
Aufbauen (S131) des Anrufs zu dem Teilnehmer über eine Netzübergangseinrichtung (BGCF, MGCF).

10. Heimatteilnehmerbedieneinrichtung mit
einem IP Multimediateil und einem Heimataufenthaltsregistrierungsteil, die miteinander wechselwirken (S8, S11),
wobei der IP Multimediateil eine Einrichtung aufweist, die konfiguriert ist, ein Profil eines Teilnehmers an eine Anrufzustandssteuerungsfunktion (S-CSCF) bereitzustellen (S5) und eine Roamingnummer als eine Routinginformation an die Anrufzustandsteuerungsfunktion (S-CSCF) bereitzustellen (S12); und
wobei der Heimataufenthaltsregistrierungsteil eine Einrichtung aufweist, die konfiguriert ist, die Roamingnummer des Teilnehmers von der besuchten Schalteinrichtung (VMSC) anzufordern (S9).

## Revendications

1. Procédé d'acheminement d'un appel aboutissant à un abonné d'un domaine basé sur protocole Internet (IMS) vers un domaine à commutation de circuits (CS),
ledit procédé comprenant les étapes consistant à :
recevoir une invitation (S1) pour ledit abonné pour un appel par au moins une fonctionnalité de contrôle d'état d'appel mise en oeuvre dans ledit domaine basé sur protocole Internet (IMS) ;
obtenir (S5) un profil dudit abonné d'un moyen de desserte d'abonné de base (HSS) à une fonctionnalité de contrôle d'état d'appel (S-CSCF) ;
demander (S7) des informations d'acheminement supplémentaires au dit moyen de desserte d'abonné de base (HSS) ;
demander (S9) à un moyen de commutation (VMSC) à l'intérieur dudit domaine à commutation de circuits (CS) actuellement visité par ledit abonné un numéro d'itinérance par ledit moyen de desserte d'abonné de base (HSS) ;
retourner (S10) ledit numéro d'itinérance dudit abonné au dit moyen de desserte d'abonné de base (HSS) par ledit moyen de commutation visité (VMSC) ;
retourner (S 12) ledit numéro d'itinérance en tant que lesdites informations d'acheminement supplémentaires dudit moyen de desserte d'abonné de base (HSS) à ladite fonctionnalité de contrôle d'état d'appel (S-CSCF) ; et
établir (5131-5133) ledit appel par le biais d'un moyen de passerelle (BGCF, MGCF) pour connecter lesdits domaines (IMS, CS) ainsi que par le biais dudit moyen de commutation visité (VMSC) au dit abonné.

2. Procédé d'acheminement d'un appel aboutissant à un abonné selon la revendication 1, comprenant l'étape comprenant:
à la suite de la réception de ladite invitation (S1), une étape consistant à retourner (S3) une indication du moyen de desserte d'abonné de base (HSS) que ledit abonné n'est pas enregistré à l'intérieur dudit domaine basé sur protocole Internet (IMS).

3. Procédé d'acheminement d'un appel aboutissant à un abonné selon la revendication 2, dans lequel
à la suite de la réception de ladite invitation (S1) et avant ledit retour d'une indication (S3), une étape consistant à demander (S2) l'emplacement dudit abonné au dit moyen de desserte d'abonné de base (HSS) est effectuée ; et
à la suite dudit retour d'une indication (S3), une étape consistant à inviter (S4) une autre fonctionnalité de contrôle d'état d'appel (S-CSCF) pour ledit appel est effectuée, dans lequel ladite autre fonctionnalité de contrôle d'état d'appel (S-CSCF) effectue toutes les étapes suivantes mentionnées dans la revendication 1 qui concernent ladite fonctionnalité de contrôle d'état d'appel.

4. Procédé d'acheminement d'un appel aboutissant à un abonné selon l'une quelconque des revendications 1 à 3, dans lequel une fonctionnalité multimédia IP et un sous-ensemble de fonctionnalités d'enregistrement d'emplacement de base sont intégrés au dit moyen de desserte d'abonné de base (HSS), et
ladite demande d'enregistrement (S2) et ledit retour (S3), si cela est applicable, sont effectués avec ladite partie multimédia IP ;
ladite demande de profil (S5) et un téléchargement (S6) sont effectués avec ladite partie multimédia IP ;
ladite étape de demande de fourniture de numéro d'itinérance (S7) telle qu'exécutée au dit moyen de desserte d'abonné de base (HSS) est effectuée avec ladite partie multimédia IP ;
à la suite de cela, une étape (S8) consistant à demander à ladite partie d'enregistrement d'emplacement de base de fournir le numéro d'itinérance dudit abonné est effectuée par ladite partie multimédia IP ;
ladite étape de demande de fourniture de numéro d'itinérance (S9) telle qu'exécutée au dit moyen de commutation visité est effectuée avec ladite partie d'enregistrement d'emplacement de base ;
ladite étape de retour de numéro d'itinérance (S10) telle qu'exécutée par ledit moyen de commutation visité (VMSC) est effectuée avec ladite partie d'enregistrement d'emplacement de base ;
à la suite de cela, une étape consistant à retourner (S11) ledit numéro d'itinérance de ladite partie d'enregistrement d'emplacement de base à ladite partie multimédia IP à l'intérieur dudit moyen de desserte d'abonné de base (HSS) est effectuée ; et
ladite étape de retour de numéro d'itinérance (S 12) telle qu'exécutée à ladite fonctionnalité de contrôle d'état d'appel de desserte (S-CSCF) est effectuée par ladite partie multimédia IP.

5. Procédé d'acheminement d'un appel aboutissant à un abonné selon la revendication 1, dans lequel l'étape consistant à demander (S7) des informations d'acheminement supplémentaires au dit moyen de desserte d'abonné de base (HSS) implique l'annulation d'au moins une fonctionnalité de desserte associée à une terminaison d'appel à l'intérieur dudit moyen de desserte d'abonné de base (HSS).

6. Procédé d'acheminement d'un appel aboutissant à un abonné selon la revendication 5, dans lequel la fonctionnalité de desserte associée à une terminaison d'appel est une fonctionnalité de desserte supplémentaire.

7. Procédé d'acheminement d'un appel aboutissant à un abonné selon la revendication 5, dans lequel la fonctionnalité de desserte associée à une terminaison d'appel est une fonctionnalité associée à des informations de déclenchement de réseau intelligent.

8. Procédé d'acheminement d'un appel aboutissant à un abonné selon la revendication 1, dans lequel
ladite étape de demande (S7) d'informations d'acheminement supplémentaires est effectuée en soumettant un message d'envoi d'informations d'acheminement (Send Routing Information) ;
ladite étape de demande (S9) de fourniture du numéro d'itinérance dudit abonné est effectuée en soumettant un message de fourniture de numéro d'itinérance (Provide Roaming Number) ;
ladite étape de retour (S 10) dudit numéro d'itinérance dudit abonné est effectuée en soumettant un message d'accusé de réception de fourniture de numéro d'itinérance (Provide Roaming Number) ; et
ladite étape de retour (S 12) dudit numéro d'itinérance en tant que lesdites informations d'acheminement supplémentaires est effectuée en soumettant un message d'accusé de réception d'envoi d'informations d'acheminement (Send Routing Information).

9. Dispositif de fonctionnalité de contrôle d'état d'appel de desserte pour fournir un service d'acheminement à un domaine à commutation de circuits (CS), ledit dispositif de fonctionnalité de contrôle d'état d'appel de desserte (S-CSCF) fournissant une fonctionnalité d'un domaine basé sur protocole Internet (IMS) et comprenant des moyens qui sont configurés pour effectuer les étapes consistant à :
recevoir une invitation (S1) pour un abonné pour un appel ;
obtenir (S5) le profil dudit abonné d'un moyen de desserte d'abonné de base (HSS) ;
demander (S7) des informations d'acheminement supplémentaires au dit moyen de desserte d'abonné de base (HSS) ;
recevoir (S 12) un numéro d'itinérance en tant que lesdites informations d'acheminement supplémentaires dudit moyen de desserte d'abonné de base (HSS) ; et
établir (S131) ledit appel par le biais d'un moyen de passerelle (BGCF, MGCF) au dit abonné.

10. Dispositif de desserte d'abonné de base, comprenant :
une partie multimédia IP et une partie d'enregistrement d'emplacement de base en interface (S8, S11) l'une avec l'autre,
dans lequel la partie multimédia IP comprend un moyen configuré pour fournir (S5) un profil d'un abonné à une fonction de contrôle d'état d'appel (S-CSCF) ; et pour fournir (S 12) un numéro d'itinérance en tant qu'informations d'acheminement à ladite fonction de contrôle d'état d'appel (S-CSCF) ; et
dans lequel la partie d'enregistrement d'emplacement de base comprend un moyen configuré pour demander (S9) ledit numéro d'itinérance dudit abonné au moyen de commutation visité (VMSC).
